# EUROPEAN PATENT APPLICATION

(11) **EP 4 851 328 A1**
(43) Date of publication of application: **09.12.2026**
(21) Application number: 24922199.5
(22) Date of filing: 31.01.2024
(51) Int. Cl.: C23C 22/00

(54) **MAGNESIUM OXIDE POWDER, METHOD FOR PRODUCING MAGNESIUM OXIDE POWDER, METHOD FOR PRODUCING MAGNESIUM OXIDE PARTICLES, AND METHOD FOR PRODUCING GRAIN-ORIENTED ELECTROMAGNETIC STEEL SHEET**

(71) Applicant: Nippon Steel Corporation, Tokyo 100-8071 (JP)
(72) Inventor: YAMAGATA, Ryutaro, Tokyo 100-8071 (JP); TAKEDA, Kazutoshi, Tokyo 100-8071 (JP); TAKAHASHI, Takafumi, Tokyo 100-8071 (JP)
(74) Representative: Vossius & Partner Patentanwälte Rechtsanwälte mbB
(86) International application number: PCT/JP2024/003010
(87) International publication number: WO 2025/163789

(57) **Abstract**

The MgO powder is an MgO powder for an annealing separator, wherein the MgO powder contains B in an amount of 0.030 mass% or more and less than 0.250 mass%, and when entire particles constituting the MgO powder are classified with a classifier based on a classification point D50 to obtain: MgO particles having an average particle size of less than 0.8 µm, which are defined as small particles; and MgO particles having an average particle size of 0.8 µm or more, which are defined as large particles, the small particles have a B content Bs of 0.0020 mass% or more and less than 0.0800 mass%, the large particles have a B content Bl of 0.0400 mass% or more and less than 0.3000 mass%, the small particles have a percentage of 5 to 80 mass% based on the entire particles, and the Bl has a ratio based on the Bs, Bl/Bs, of 1.05 or more and 30.0 or less.

## Description

### TECHNICAL FIELD

The present invention relates to an MgO powder, a manufacturing method of an MgO powder, a manufacturing method of MgO particles, and a manufacturing method of a grain-oriented electrical steel sheet.

### BACKGROUND ART

A grain-oriented electrical steel sheet is a soft magnetic material, and is mainly used as a core material of a transformer. Thus, the grain-oriented electrical steel sheet is required to have magnetic characteristics such as high magnetization characteristics and a low iron loss. The iron loss is a power loss due to consumption as thermal energy that occurs when the iron core is excited by an AC magnetic field, and the iron loss is required to be as low as possible from the viewpoint of energy saving.

In manufacture of a grain-oriented electrical steel sheet, a manufacturing method including steps of hot rolling, hot rolled sheet annealing, cold rolling, decarburization annealing, and finish annealing is generally applied to a steel slab adjusted to have a predetermined composition.

Among these steps, in the finish annealing step, a steel sheet coiled in a coil shape is annealed at a high temperature for a long time to orient the crystal orientation in the GOSS orientation, which is good for magnetic characteristics (to increase the texture sharpness of the GOSS orientation ). At that time, an annealing separator is applied to prevent sticking of the coil.

As the annealing separator applied to the coil, an annealing separator containing magnesium oxide (MgO) as a main component is often used. This is because, when an annealing separator containing MgO as a main component is used, silicon dioxide (SiO₂) on the surface of a steel sheet reacts with MgO at the time of finish annealing to successfully form a forsterite (Mg₂SiO₄)-based coating (primary coating) on the surface of the steel sheet, the coating playing roles of applying tension to the surface of the steel sheet and imparting insulation properties to the steel sheet. That is, this is because, when an annealing separator containing MgO as a main component is used, it is possible not only to prevent sticking at the time of finish annealing but also to improve the magnetic characteristics of a grain-oriented electrical steel sheet.

As described above, in manufacture of a grain-oriented electrical steel sheet, the characteristics of the grain-oriented electrical steel sheet can be changed by an annealing separator. Therefore, in recent years, studies have been conducted on trace components contained in an annealing separator. Furthermore, studies have been conducted not only on the amount of trace components but also on the structure of a compound containing trace component elements in magnesium oxide for an annealing separator.

For example, Patent Document 1 discloses a powder containing 0.04 mass% or more and 0.30 mass% or less of boron and containing magnesium oxide as a main component for an annealing separator, in which the proportion of tri-coordinated boron in the boron is 80% or more and 95% or less.

Patent Document 2 discloses a method for manufacturing a powder for an annealing separator, the method including baking a raw material containing one or both of magnesium hydroxide and magnesium carbonate and boron, and then adjusting the proportion of tri-coordinated boron by adjusting humidity of the baked product, in which the proportion of tri-coordinated boron in boron contained in the powder for an annealing separator is 70% or more and 95% or less.

In each of Patent Documents 1 and 2, the proportion of tri-coordinated boron is defined based on findings that 1) a coating reaction behavior at a high temperature (1100°C or higher) affects purification of impurities, 2) boron in an existence form of tri-coordination affects the coating reaction behavior at a high temperature, and 3) boron in an existence form of tetra-coordination not only does not contribute to the purification of impurities, but also enters a steel sheet during high-temperature annealing to form Fe₂B, and causes repeated bending deterioration.

### Citation List

### Patent Documents

Patent Document 1: Japanese Patent No. 6613919
Patent Document 2: Japanese Unexamined Patent Application, First Publication No. 2020-15982

### SUMMARY OF INVENTION

### Technical Problem

As described in Patent Documents 1 and 2, by controlling the amount of boron and the proportion of tri-coordinated boron in a powder for an annealing separator, it is possible to solve the problems of poor coating external appearance due to insufficient reactivity at a high temperature and poor purification of impurities from steel. However, the present inventors studied and found that these techniques may fail to achieve both of: improving secondary recrystallization structure by using the tri-coordinated boron's effect of inhibiting the decomposition of precipitates; and sufficiently increasing coating tension, which affects the improvement in magnetic characteristics. Therefore, the techniques of Patent Documents 1 and 2 cannot be said to sufficiently improve the magnetic characteristics.

The present invention has been made in view of the above problem.

An object of the present invention is to provide an MgO powder that is used for an annealing separator to be applied to a steel sheet before finish annealing, with which a grain-oriented electrical steel sheet after finish annealing can be provided with excellent magnetic characteristics, external appearance, and coating tension. Another object of the present invention is to provide a manufacturing method of a grain-oriented electrical steel sheet using the MgO powder for an annealing separator; a manufacturing method of the MgO powder; and a manufacturing method of MgO particles contained in the MgO powder.

### Solution to Problem

The present inventors studied to improve the coating characteristics of a grain-oriented electrical steel sheet through controlling the annealing separator. As a result, it was found that: when the MgO powder contained in the annealing separator contains boron (B), coating characteristics and magnetic characteristics can be improved; however, when boron is contained in a certain amount or more, a larger amount of boron enters the steel sheet, and secondary recrystallization and purification are rather inhibited.

Therefore, in order to improve coating characteristics and magnetic characteristics, the present inventors studied a method to sufficiently obtain coating characteristics and magnetic characteristics by boron even when the B content is suppressed. As a result, the present inventors found that it is effective to secure a certain amount of MgO particles having a small particle size among the MgO particles constituting the MgO powder.

In addition, the present inventors also found that the characteristics are further improved when the percentage of tri-coordinated boron is controlled in boron (B) contained in the MgO powder and/or the MgO powder contains one or more of Cl, Ca, Sr, and Ba.

The present invention has been made on the basis of the above-described findings. The gist of the present invention is as follows.
[1] The MgO powder according to an embodiment of the present invention is an MgO powder for an annealing separator, wherein the MgO powder contains B in an amount of 0.030 mass% or more and less than 0.250 mass%, and when entire particles constituting the MgO powder are classified with a classifier based on a classification point D50 to obtain: MgO particles having an average particle size of less than 0.8 µm, which are defined as small particles; and MgO particles having an average particle size of 0.8 µm or more, which are defined as large particles, the small particles have a B content Bs of 0.0020 mass% or more and less than 0.0800 mass%, the large particles have a B content Bl of 0.0400 mass% or more and less than 0.3000 mass%, the small particles have a percentage of 5 to 80 mass% based on the entire particles, and the Bl has a ratio based on the Bs, Bl/Bs, of 1.05 or more and 30.0 or less.
[2] In the MgO powder according to [1], B contained in the small particles may have tri-coordinated boron in a percentage of 40 mass% or more and 70 mass% or less, and B contained in the large particles may have tri-coordinated boron in a percentage of 80 mass% or more and 95 mass% or less.
[3] In the MgO powder according to [1], the large particles' tri-coordinated boron amount may have a ratio of 2.00 or more and 20.00 or less based on the small particles' tri-coordinated boron amount.
[4] In the MgO powder according to [2], the large particles' tri-coordinated boron amount may have a ratio of 2.00 or more and 20.00 or less based on the small particles' tri-coordinated boron amount.
[5] In the MgO powder according to any one of [1] to [4], the MgO powder may further contain Cl in an amount of 0.005 mass% or more and 0.080 mass% or less.
[6] In the MgO powder according to any one of [1] to [4], the MgO powder may further contain one or more selected from the group consisting of Ca, Sr, and Ba in a total amount of 0.02 mass% or more and 4.00 mass% or less.
[7] In the MgO powder according to [5], the MgO powder may further contain one or more selected from the group consisting of Ca, Sr, and Ba in a total amount of 0.02 mass% or more and 4.00 mass% or less.
[8] The manufacturing method of an MgO powder according to another embodiment of the present invention is a manufacturing method of the MgO powder according to [1], the method including: mixing: MgO particles having a B content of 0.0020 mass% or more and 0.0800 mass% or less and having an average particle size of less than 0.8 µm; and MgO particles having a B content of 0.0400 mass% or more and 0.3000 mass% or less and having an average particle size of 0.8 µm or more so that the B content of the MgO particles having an average particle size of 0.8 µm or more has a ratio of 1.05 or more based on the B content of the MgO particles having an average particle size of less than 0.8 µm, and the MgO particles having an average particle size of less than 0.8 µm are contained in a mass ratio of 0.05 or more and 0.80 or less based on the mixed MgO powder.
[9] The manufacturing method of MgO particles according to another embodiment of the present invention is a manufacturing method of the MgO particles having an average particle size of less than 0.8 µm and being according to [8], the method including: heating and baking, in air or nitrogen, a raw material powder made of one or two or more selected from magnesium hydroxide, basic magnesium carbonate, and magnesium carbonate, the raw material powder containing B in a mass ratio of 0.0020 or more and 0.0800 or less based on MgO equivalent of the raw material powder, and having an average particle size of less than 0.8 µm.
[10] The manufacturing method of MgO particles according to another embodiment of the present invention is a manufacturing method of the MgO particles having an average particle size of less than 0.8 µm and being according to [8], the method including: heating and baking, in air or nitrogen, a raw material powder made of one or two or more selected from magnesium hydroxide, basic magnesium carbonate, and magnesium carbonate, and having an average particle size of less than 0.8 µm, after adding boron or a boron compound so that the raw material powder contains B in a mass ratio of 0.0020 or more and 0.0800 or less based on MgO equivalent of the raw material powder.
[11] In the manufacturing method of MgO particles according to [9] or [10], the baking may be performed at a baking temperature of 700 to 1100°C.
[12] The manufacturing method of a grain-oriented electrical steel sheet according to another embodiment of the present invention includes: a hot rolling step of hot-rolling a steel slab to obtain a hot rolled sheet; a hot rolled sheet annealing step of annealing the hot rolled sheet; a cold rolling step of cold-rolling the hot rolled sheet after the hot rolled sheet annealing step to obtain a cold rolled sheet; a decarburization annealing step of decarburization-annealing the cold rolled sheet; and a finish annealing step of applying and drying an annealing separator on the cold rolled sheet after the decarburization annealing step, followed by finish annealing, wherein the annealing separator to be used is an annealing separator obtained by mixing the MgO powder according to any one of [1] to [4], TiO₂, and water into a slurry form.
[13] The manufacturing method of a grain-oriented electrical steel sheet according to another embodiment of the present invention includes: a hot rolling step of hot-rolling a steel slab to obtain a hot rolled sheet; a hot rolled sheet annealing step of annealing the hot rolled sheet; a cold rolling step of cold-rolling the hot rolled sheet after the hot rolled sheet annealing step to obtain a cold rolled sheet; a decarburization annealing step of decarburization-annealing the cold rolled sheet; and a finish annealing step of applying and drying an annealing separator on the cold rolled sheet after the decarburization annealing step, followed by finish annealing, wherein the annealing separator to be used is an annealing separator obtained by mixing the MgO powder according to [5], TiO₂, and water into a slurry form.
[14] The manufacturing method of a grain-oriented electrical steel sheet according to another embodiment of the present invention includes: a hot rolling step of hot-rolling a steel slab to obtain a hot rolled sheet; a hot rolled sheet annealing step of annealing the hot rolled sheet; a cold rolling step of cold-rolling the hot rolled sheet after the hot rolled sheet annealing step to obtain a cold rolled sheet; a decarburization annealing step of decarburization-annealing the cold rolled sheet; and a finish annealing step of applying and drying an annealing separator on the cold rolled sheet after the decarburization annealing step, followed by finish annealing, wherein the annealing separator to be used is an annealing separator obtained by mixing the MgO powder according to [6], TiO₂, and water into a slurry form.
[15] The manufacturing method of a grain-oriented electrical steel sheet according to another embodiment of the present invention includes: a hot rolling step of hot-rolling a steel slab to obtain a hot rolled sheet; a hot rolled sheet annealing step of annealing the hot rolled sheet; a cold rolling step of cold-rolling the hot rolled sheet after the hot rolled sheet annealing step to obtain a cold rolled sheet; a decarburization annealing step of decarburization-annealing the cold rolled sheet; and a finish annealing step of applying and drying an annealing separator on the cold rolled sheet after the decarburization annealing step, followed by finish annealing, wherein the annealing separator to be used is an annealing separator obtained by mixing the MgO powder according to [7], TiO₂, and water into a slurry form.

### Advantageous Effects of Invention

According to the above embodiments of the present invention, it is possible to provide an MgO powder that is used for an annealing separator to be applied to a steel sheet before finish annealing in the manufacturing process of a grain-oriented electrical steel sheet, with which a grain-oriented electrical steel sheet after finish annealing can be provided with excellent magnetic characteristics, external appearance, and coating tension. In addition, according to the present invention, it is possible to provide a manufacturing method of a grain-oriented electrical steel sheet using the MgO powder; a manufacturing method of the MgO powder; and a manufacturing method of MgO particles contained in the MgO powder.

### DESCRIPTION OF EMBODIMENTS

The MgO powder according to an embodiment of the present invention (MgO powder according to the embodiment) is an MgO powder for an annealing separator.

In the MgO powder according to the embodiment,
the MgO powder contains B in an amount of 0.030 mass% or more and less than 0.250 mass%,
the small particles have a B content Bs of 0.0020 mass% or more and less than 0.0800 mass%,
the large particles have a B content Bl of 0.0400 mass% or more and less than 0.3000 mass%,
the small particles have a percentage of 5 to 80 mass% based on the entire particles, and
the Bl has a ratio based on the Bs, Bl/Bs, of 1.05 or more and 30.0 or less.

In the embodiment, among the entire particles constituting the MgO powder, the small particles are particles having an average particle size of less than 0.8 µm, which are obtained by using an airflow classifier based on a classification point D50 of 0.8 µm; and the large particles are particles having an average particle size of 0.8 µm or more, which are obtained by using an airflow classifier based on a classification point D50 of 0.8 µm. However, classification is performed only one time.

Each reason for limitation will be described below.

### [MgO powder containing B in an amount of 0.030 mass% or more and less than 0.250 mass%]

When the MgO powder contains boron (B), an annealing separator using the MgO powder is applied and finish annealing is performed, so that the obtained grain-oriented electrical steel sheet can be improved in coating characteristics and magnetic characteristics.

When the B content in MgO is less than 0.030 mass%, the above effect cannot be sufficiently obtained. Therefore, the B content in the (entire) MgO powder is 0.030 mass% or more.

On the other hand, when the B content in MgO is too large, a large amount of boron enters the steel sheet, and secondary recrystallization and purification are rather inhibited. Therefore, the B content in the (entire) MgO powder is less than 0.250 mass%.

Here, the MgO powder containing B means that B is contained inside the MgO particles constituting the MgO powder, and does not mean that particles of boron or a boron compound are present alone.

The B content in the MgO powder is determined by quantitatively analyzing the MgO powder using inductively coupled plasma mass spectrometry (ICP-MS). For quantitative analysis by ICP-MS, the MgO powder is dissolved in a mixed acid of hydrochloric acid and nitric acid. At this time, if there is an undissolved residue, the residue is recovered and dissolved in an alkaline solution to perform analysis.

### [Small particles have percentage of 5 to 80 mass% based on entire particles]

Among the MgO particles, the small particles are highly reactive, and react with the coating at a low temperature. Therefore, in order for the grain-oriented electrical steel sheet to obtain excellent characteristics, the percentage of the small particles is 5 mass% or more based on the entire particles. The percentage of the small particles is preferably 15 mass% or more.

On the other hand, when the percentage of the small particles is more than 80 mass%, sintering during finish annealing proceeds too much, and adversely affects the shape of the steel sheet; or steel sheets are fixed and become difficult to deliver after finish annealing. Therefore, the percentage of the small particles is 80 mass% or less.

The percentage of the small particles based on the entire particles is determined, after classification with a classifier, as the ratio of the weight of the powder classified as the small particles having an average particle size of less than 0.8 µm to the weight before classification.

### [Small particles have B content of 0.0020 mass% or more and less than 0.0800 mass%]

### [Large particles have B content of 0.0400 mass% or more and less than 0.3000 mass%]

In the MgO powder according to the embodiment, when entire particles constituting the MgO powder are classified with a classifier based on a classification point D50 to obtain: MgO particles having an average particle size of less than 0.8 µm, which are defined as small particles; and MgO particles having an average particle size of 0.8 µm or more, which are defined as large particles, the small particles have a B content (Bs) of 0.0020 mass% or more and less than 0.0800 mass%, and the large particles have a B content (Bl) of 0.0400 mass% or more and less than 0.3000 mass%.

The B contained in the small particles and the B contained in the large particles are different from each other in their working temperatures. The B contained in the small particles, which are highly active, has high efficacy at a lower temperature, and the B contained in the large particles makes it possible to provide B at a higher temperature for a long time. The B content (Bs) in the small particles, which function before the coating starts to be formed, is effective even though it is relatively small. Specifically, the effect can be obtained at 0.0020 mass% or more. On the other hand, when the B content in the small particles is large, there is a possibility that the coating is excessively developed at a low temperature, and precipitates are inhibited from decomposition to excessively increase the secondary recrystallization temperature. Therefore, Bs is less than 0.0800 mass%.

On the other hand, the large particles require MgO in a higher concentration than the small particles, and the secondary recrystallization is stabilized when the B content (Bl) is 0.0400 mass% or more and less than 0.3000 mass%.

### [Bl/Bs is 1.05 or more and 30.0 or less]

When the ratio (Bl/Bs) of the B content (Bl) of the large particles (MgO particles having an average particle size of 0.8 µm or more) to the B content (Bs) of the small particles (MgO particles having an average particle size of less than 0.8 µm) is less than 1.05, the pinning force is kept high at a low temperature, but the pinning force rapidly decreases at a high temperature due to precipitates rapidly decomposing. In this case, the time required for secondary recrystallization for aligning in an ideal orientation cannot be secured. Therefore, grains grow also in orientations deviated from the orientation in which magnetic characteristics are good, and the grain-oriented electrical steel sheet becomes poor in magnetic characteristics.

On the other hand, when (Bl/Bs) is more than 30.0, precipitates decompose too slowly at a high temperature, and secondary recrystallization is less likely to occur. In this case, fine grains may be generated in the region where secondary recrystallization has not occurred.

Therefore, (Bl/Bs) is 1.05 or more and 30.0 or less.

The B content in each of the small particles and the large particles is determined by performing quantitative analysis with ICP-MS on the particles of the small particles (< 0.8 µm) and the large particles (≥ 0.8 µm), each of which are obtained through classification using an airflow classifier based on a classification point D50 of 0.8 µm.

For quantitative analysis by ICP-MS, the MgO powder is dissolved in a mixed acid of hydrochloric acid and nitric acid. At this time, if there is an undissolved residue, the residue is recovered and dissolved in an alkaline solution to perform analysis.

### [Preferably, B contained in small particles has tri-coordinated boron in percentage of 40 mass% or more and 70 mass% or less, and B contained in large particles has tri-coordinated boron in percentage of 80 mass% or more and 95 mass% or less]

Boron (B) contained in MgO is mainly present in the state of tri-coordinated boron (BO₃) or tetra-coordinated boron (BO₄). Among them, tri-coordinated boron has higher reactivity with the coating than tetra-coordinated boron. That is, as the percentage of tri-coordinated boron increases, higher effects can be obtained with a lower B content.

Therefore, it is preferable that B contained in the small particles has tri-coordinated boron in a percentage of 40 mass% or more, and B contained in the large particles has tri-coordinated boron in a percentage of 80 mass% or more.

On the other hand, MgO, which is highly reactive, quickly supplies Mg. Mg forms an extremely stable composite oxide with Al, and causes decomposition of precipitates containing Al. That is, when the percentage of tri-coordinated boron is excessively increased in order to enhance reactivity with the coating, not only B but also Mg is supplied quickly, so that precipitates may decompose too quickly. Therefore, the percentage of tri-coordinated boron is preferably a certain value or less. In the small particles which react at a lower temperature, the optimum BO₃ percentage of the small particles is lower than that of the large particles. Specifically, from the viewpoint of inhibiting the decomposition of AlN, it is preferable that B contained in the small particles has tri-coordinated boron in a percentage of 70 mass% or less, and B contained in the large particles has tri-coordinated boron in a percentage of 95 mass% or less.

### [Preferably, large particles' tri-coordinated boron amount has ratio of 2.00 or more and 20.00 or less based on small particles' tri-coordinated boron amount]

Among the MgO particles, the small particles are highly reactive, and react at a low temperature. Therefore, in particular, the small particles have tri-coordinated boron in a higher percentage, thereby significantly exhibiting the effect of inhibiting the decomposition of precipitates.

Therefore, in order to maintain the boron's effect of inhibiting the decomposition of precipitates from low temperatures to high temperatures, the ratio of the large particles' tri-coordinated boron amount based on the small particles' tri-coordinated boron amount (may be referred to as BO₃ amount ratio) is preferably 2.00 or more.

On the other hand, when the ratio of tri-coordinated boron amount is more than 20.00, the effect of inhibiting the decomposition of precipitates is decreased at a high temperature. Therefore, the ratio of tri-coordinated boron percentage is preferably 20.00 or less.

The percentage of tri-coordinated boron in B contained in the small particles and the large particles is determined by the following method.

The small particles and the large particles are measured by NMR (Nuclear Magnetic Resonance), respectively. From the obtained spectrum, those in the range of 27 to 6 ppm are specified as tri-coordinated boron, and those in the range of less than 6 to -6 ppm are specified as tetra-coordinated boron. The integrated area of the former is divided by the integrated area of the total of the former and the latter. The ratio is determined as the presence ratio of tri-coordinated boron and tetra-coordinated boron.

In addition, from the B content and the tri-coordinated boron percentage of each of the small particles and the large particles, and the mass ratio of the small particles and the large particles, the ratio of the large particles' tri-coordinated boron amount based on the small particles' tri-coordinated boron amount can be calculated.

### [Preferably, MgO powder further contains Cl in an amount of 0.005 mass% or more and 0.080 mass% or less, and/or contains one or more selected from group consisting of Ca, Sr, and Ba in total amount of 0.02 mass% or more and 4.00 mass% or less]

Cl (chlorine) or an alkaline earth metal is an element that enhances reactivity with SiO₂. Therefore, it is preferable that the MgO powder according to the embodiment contains Cl in an amount of 0.005 mass% or more and/or one or more selected from the group consisting of Ca, Sr, and Ba in a total amount of 0.02 mass% or more to further improve coating characteristics (external appearance and coating tension).

On the other hand, it is not preferable that the Cl content is more than 0.080 mass%, or the total amount of one or more selected from the group consisting of Ca, Sr, and Ba is more than 4.00 mass% because the steel sheet undergoes desulfurization due to the strength of the sulfurization tendency.

In the MgO powder according to the embodiment, Cl, Ca, Sr, and Ba are contained in the MgO particles, and the contents thereof can be measured by a method of quantitatively analyzing the powder with inductively coupled plasma mass spectrometry (ICP-MS), or the like. For quantitative analysis by ICP-MS, the MgO powder is dissolved in a mixed acid of hydrochloric acid and nitric acid. At this time, if there is an undissolved residue, the residue is recovered and dissolved in an alkaline solution to perform analysis.

### <Manufacturing method of MgO powder>

The MgO powder according to the embodiment can be manufactured by the following method. However, the effects can be obtained regardless of the manufacturing method as long as the features described above are included, and therefore, the manufacturing method is not limited to the following.

### [Example of manufacturing method]

Mixing: MgO particles having a B content of 0.0020 mass% or more and less than 0.0800 mass% and having an average particle size of less than 0.8 µm; and MgO particles having a B content of 0.0400 mass% or more and less than 0.3000 mass% and having an average particle size of 0.8 µm or more so that the B content of the MgO particles having an average particle size of 0.8 µm or more has a ratio of 1.05 or more (preferably 30.0 or less) based on the B content of the MgO particles having an average particle size of less than 0.8 µm, and the MgO particles having an average particle size of less than 0.8 µm are contained in a mass ratio of 0.05 or more and 0.80 or less based on the entire mass of the mixed MgO powder.

The MgO particles having an average particle size of less than 0.8 µm are preferably particles having an average particle size of 0.3 µm or more from the viewpoint of preventing sticking.

The particles having an average particle size of 0.8 µm or more are preferably particles having an average particle size of 4.0 µm or less from the viewpoint of securing the shape of the steel sheet.

In order to mix them to have the above-described predetermined content ratio or mass ratio, for example, the content is controlled by a method such as: removing trace elements through ion exchange of the raw materials before baking; and adding trace elements at the time of baking MgO, the particle size is controlled by a method such as classification as necessary, and the mass ratio is controlled by mixing ratio.

### [Manufacturing method of MgO particles having average particle size of less than 0.8 µm]

Among the MgO particles to be mixed, MgO particles having an average particle size of less than 0.8 µm can be manufactured by one of the methods (I) and (II) below.
(I) Heating and baking, in air or nitrogen, a raw material powder made of one or two or more selected from magnesium hydroxide, basic magnesium carbonate, and magnesium carbonate, the raw material powder containing B in a mass ratio of 0.0020 or more and 0.0800 or less based on MgO equivalent of the raw material powder (having a B content of 0.0020 mass% or more and 0.0800 mass% or less when the MgO equivalent of the raw material powder is defined as 100%), and having an average particle size of less than 0.8 µm.
   Here, the MgO equivalent means the weight of the MgO fraction in the weight of the raw material powder, and (MgO equivalent) = (weight of raw material powder) × (molecular weight of MgO)/(molecular weight of raw material powder in stoichiometry).
(II) Heating and baking, in air or nitrogen, a raw material powder made of one or two or more selected from magnesium hydroxide, basic magnesium carbonate, and magnesium carbonate, and having an average particle size of less than 0.8 µm, after adding boron or a boron compound so that the raw material powder contains B in a mass ratio of 0.0020 or more and 0.0800 or less based on MgO equivalent of the raw material powder (has a B content of 0.0020 mass% or more and 0.0800 mass% or less when the MgO equivalent of the raw material powder is defined as 100%).

That is, a raw material powder made of one or two or more selected from magnesium hydroxide, basic magnesium carbonate, and magnesium carbonate, and having an average particle size of less than 0.8 µm is controlled so that the total of the B content that is originally contained (for example, as impurities) in the raw material powder and the B content that is added as necessary becomes 0.0020 or more and 0.0800 or less in terms of mass ratio based on the MgO equivalent of the raw material powder, and then baked in air or nitrogen, to obtain MgO particles.

The baking is preferably performed at a baking temperature of 700 to 1100°C, because baking is made possible without substantially changing the particle size while the chemical structure of the baked BO₃ is stabilized, and the percentage of tri-coordinated boron in the MgO particles can be increased. From the viewpoint of maintaining the shape of the powder, the baking temperature is more preferably 700 to 1000°C. The baking time is preferably 5 to 10 minutes.

It is not preferable that the baking atmosphere is not in air or nitrogen because it is economically disadvantageous.

Examples of the boron compound to be added include boron, Na₂B₄O₅(OH)₄·8H₂O, and magnesium borate.

The MgO particles having an average particle size of 0.8 µm or more can be manufactured by, for example, classifying the raw material powder; then adding boron or a boron compound to adjust the B content as necessary, and then baking the same under controlled conditions.

### [Manufacturing method of grain-oriented electrical steel sheet]

The grain-oriented electrical steel sheet can be manufactured by a manufacturing method including:
a hot rolling step of hot-rolling a steel slab to obtain a hot rolled sheet;
a hot rolled sheet annealing step of annealing the hot rolled sheet;
a cold rolling step of cold-rolling the hot rolled sheet after the hot rolled sheet annealing step to obtain a cold rolled sheet;
a decarburization annealing step of decarburization-annealing the cold rolled sheet; and
a finish annealing step of applying and drying an annealing separator on the cold rolled sheet after the decarburization annealing step, followed by finish annealing.

In the embodiment, as the annealing separator to be applied before finish annealing, an annealing separator obtained by mixing the above-described MgO powder according to the embodiment, TiO₂, and water into a slurry form is used.

By using the annealing separator, a grain-oriented electrical steel sheet having excellent magnetic characteristics, excellent external appearance of the coating, and excellent coating tension can be manufactured.

In the above manufacturing method, as for the chemical composition of the steel slab and the conditions of each step, known manufacturing conditions of a grain-oriented electrical steel sheet can be applied except for the annealing separator to be used.

Regarding the annealing separator, when the MgO powder, TiO₂, and water are mixed into a slurry form (when an aqueous slurry is obtained), the percentage of TiO₂ in terms of mass is preferably 0.5 to 8.5% when the mass of the MgO powder for an annealing separator is defined as 100%.

### Examples

### <Example 1>

MgO particles having an average particle size of less than 0.8 µm and MgO particles having an average particle size of 0.8 µm or more, being different from each other in the B content, were mixed to obtain MgO powders for an annealing separator shown in Tables 1A and 1B. To the MgO powder, 5.0% mass of TiO₂ was added when the mass of the MgO powder was defined as 100%, and water was further added, to obtain an annealing separator aqueous slurry.

The annealing separator aqueous slurry was applied on a cold rolled sheet (a known steel sheet to be used for a material of a grain-oriented electrical steel sheet) after decarburization annealing (after primary recrystallization annealing). The cold rolled sheet whose surface was applied with the annealing separator was baked at 300°C for 30 seconds to dry the aqueous slurry. After being baked, the steel sheet was held at 1200°C for 20 hours for finish annealing.

By the above manufacturing process, a grain-oriented electrical steel sheet including a base steel sheet and a primary coating containing a composite oxide such as forsterite (Mg₂SiO₄) was manufactured.

The obtained grain-oriented electrical steel sheet was evaluated for magnetic characteristics, external appearance, and coating tension, in the following manner.

### [Magnetic characteristics]

Magnetic characteristics were determined by the following method.

From the grain-oriented electrical steel sheet of each No., a sample of rolling direction length 300 mm × width 60 mm was collected. The sample was applied with a magnetic field of 800 A/m and magnetic flux density B8 was measured in accordance with the SST method described in Appendix JA of JISC2556:2015.

When the magnetic flux density was 1.93 T or more, it was determined that the magnetic characteristics were excellent.

### [External appearance]

From the grain-oriented electrical steel sheet of each No., a sample of rolling direction length 50 mm × width 60 mm was collected. The color tone of the sample was evaluated, and then a known insulating coating was formed on the surface to evaluate coating defect.

It was determined that the external appearance was excellent when the color tone of the primary coating before the insulating coating was formed on the grain-oriented electrical steel sheet of each No. was uniform, and there was no coating defect (hole and rusting) after the insulating coating was formed. Specifically, evaluation was performed as follows.

Ex (Excellent): The color tone before the insulating coating is formed is uniform, and the maximum area of coating defects after the insulating coating is formed is less than 2 mm².

G (GOOD): The color tone before the insulating coating is formed is uniform, and the maximum area of coating defects after the insulating coating is formed is 2 to 4 mm².

P (Poor): The color tone before the insulating coating is formed is uneven in color, or the maximum area of coating defects after the insulating coating is formed is more than 4 mm².

### [Coating Tension]

The coating tension of the grain-oriented electrical steel sheet of each No. was evaluated by the following method.

Specifically, from the grain-oriented electrical steel sheet after finish annealing, a sample of rolling direction length 300 mm × width 60 mm was collected. For the sample, the primary coating was removed only on one surface by pickling, and then coating tension was determined from the radius of curvature of the curvature of the steel sheet. The method for determining the coating tension from the radius of curvature may be a known method, and for example, the method disclosed in "Report on Post-Evaluation of Development of Innovative Magnetic Materials for Reduction of Power Loss in Transformers" (February 2006) of Research Evaluation Committee of New Energy and Industrial Technology Development Organization may be used.

It was determined that the coating tension was excellent when the coating tension was 350 gf/mm² or more.

**[Table 1A]**

| No. | MgO powder | | | | | | | | | | |
|---|---|---|---|---|---|---|---|---|---|---|---|
| | Content in MgO powder (mass%) | | | | | | MgO particles having average particle size of less than 0.8 µm | | | MgO particles having average particle size of 0.8 µm or more | |
| | B | Cl | Ca | Sr | Ba | Total of Ca, Sr, and Ba | B content Bs (mass%) | Percentage of tri-coordinated boron (mass%) | Percentage in entire particles (mass%) | B content BI (mass%) | Percentage of tri-coordinated boron (mass%) |
| 1 | 0.066 | | | | | | 0.0400 | 52 | 15 | 0.0700 | 83 |
| 2 | 0.074 | 0.030 | | | | | 0.0400 | 52 | 15 | 0.0800 | 83 |
| 3 | 0.072 | | 0.70 | | | 0.70 | 0.0400 | 42 | 20 | 0.0800 | 83 |
| 4 | 0.072 | 0.030 | 0.70 | | | 0.70 | 0.0400 | 69 | 20 | 0.0800 | 83 |
| 5 | 0.072 | 0.030 | 0.70 | | | 0.70 | 0.0400 | 52 | 20 | 0.0800 | 92 |
| 6 | 0.072 | 0.030 | 0.70 | | | 0.70 | 0.0400 | 52 | 20 | 0.0800 | 83 |
| 7 | 0.028 | 0.030 | 0.70 | | | 0.70 | 0.0050 | 75 | 40 | 0.0440 | 82 |
| 8 | 0.172 | 0.030 | 0.70 | | | 0.70 | 0.0330 | 75 | 50 | 0.3100 | 82 |
| 9 | 0.031 | 0.030 | 0.70 | | | 0.70 | 0.0018 | 68 | 25 | 0.0410 | 84 |
| 10 | 0.083 | 0.030 | 0.70 | | | 0.70 | 0.0900 | 70 | 25 | 0.0800 | 80 |
| 11 | 0.060 | 0.030 | 0.70 | | | 0.70 | 0.0600 | 75 | 25 | 0.0600 | 76 |
| 12 | 0.201 | 0.030 | 0.70 | | | 0.70 | 0.0070 | 75 | 25 | 0.2660 | 76 |
| 13 | 0.168 | 0.030 | | 0.70 | | 0.70 | 0.0440 | 54 | 40 | 0.2500 | 92 |
| 14 | 0.037 | 0.030 | | | 0.70 | 0.70 | 0.0320 | 54 | 50 | 0.0420 | 93 |
| 15 | 0.040 | 0.030 | 0.70 | | | 0.70 | 0.0120 | 52 | 6 | 0.0420 | 91 |
| 16 | 0.036 | 0.030 | 0.70 | | | 0.70 | 0.0320 | 50 | 78 | 0.0480 | 89 |
| 17 | 0.241 | 0.030 | 0.70 | | | 0.70 | 0.0790 | 40 | 8 | 0.2550 | 89 |
| 18 | 0.040 | 0.007 | 0.70 | | | 0.70 | 0.0320 | 50 | 50 | 0.0480 | 89 |
| 19 | 0.040 | 0.082 | 0.70 | | | 0.70 | 0.0320 | 50 | 50 | 0.0480 | 89 |
| 20 | 0.040 | 0.030 | 0.03 | | | 0.03 | 0.0320 | 50 | 50 | 0.0480 | 89 |
| 21 | 0.040 | 0.030 | 2.50 | 1.20 | | 3.70 | 0.0320 | 50 | 50 | 0.0480 | 89 |
| 22 | 0.047 | 0.030 | 0.70 | | | 0.70 | 0.0320 | 50 | 4 | 0.0480 | 89 |
| 23 | 0.035 | 0.030 | 0.70 | | | 0.70 | 0.0320 | 50 | 81 | 0.0480 | 89 |
| 24 | 0.253 | 0.030 | 0.70 | | | 0.70 | 0.0700 | 75 | 20 | 0.2990 | 82 |
| 25 | 0.079 | 0.030 | 0.70 | | | 0.70 | 0.0780 | 70 | 75 | 0.0820 | 80 |
| 26 | 0.030 | 0.082 | 0.70 | | | 0.70 | 0.0050 | 50 | 50 | 0.0550 | 89 |

**[Table 1B]**

| No. | MgO powder | | | | Grain-oriented electrical steel sheet | | | Remarks |
|---|---|---|---|---|---|---|---|---|
| | BI/Bs | BO₃ amount ratio in small particles | BO₃ amount ratio in large particles | BO₃ amount ratio | Characteristics | | | |
| | | | | | Magnetic characteristics B8 (T) | External appearance | Coating tension (gf/mm²) | |
| 1 | 1.75 | 0.0031 | 0.0581 | 18.62 | 1.93 | Ex | 420 | Invention Example |
| 2 | 2.00 | 0.0031 | 0.0664 | 21.28 | 1.94 | G | 520 | Invention Example |
| 3 | 2.00 | 0.0034 | 0.0664 | 19.76 | 1.93 | Ex | 530 | Invention Example |
| 4 | 2.00 | 0.0055 | 0.0664 | 12.03 | 1.93 | Ex | 554 | Invention Example |
| 5 | 2.00 | 0.0042 | 0.0736 | 17.69 | 1.93 | Ex | 510 | Invention Example |
| 6 | 2.00 | 0.0042 | 0.0664 | 15.96 | 1.94 | Ex | 533 | Invention Example |
| 7 | 8.80 | 0.0015 | 0.0361 | 24.05 | 1.93 | G | 320 | Comparative Example |
| 8 | 9.39 | 0.0124 | 0.2542 | 20.54 | 1.93 | G | 330 | Comparative Example |
| 9 | 22.78 | 0.0003 | 0.0344 | 112.55 | 1.91 | P | 480 | Comparative Example |
| 10 | 0.89 | 0.0158 | 0.0640 | 4.06 | 1.91 | P | 480 | Comparative Example |
| 11 | 1.00 | 0.0113 | 0.0456 | 4.05 | 1.92 | Ex | 340 | Comparative Example |
| 12 | 38.0 | 0.0013 | 0.2022 | 154.0 | 1.92 | Ex | 340 | Comparative Example |
| 13 | 5.68 | 0.0095 | 0.2300 | 24.20 | 1.93 | G | 488 | Invention Example |
| 14 | 1.31 | 0.0086 | 0.0391 | 4.52 | 1.94 | Ex | 498 | Invention Example |
| 15 | 3.50 | 0.0004 | 0.0382 | 102.1 | 1.93 | G | 455 | Invention Example |
| 16 | 1.50 | 0.0125 | 0.0427 | 3.42 | 1.94 | Ex | 541 | Invention Example |
| 17 | 3.23 | 0.0025 | 0.2270 | 89.77 | 1.94 | G | 541 | Invention Example |
| 18 | 1.50 | 0.0080 | 0.0427 | 5.34 | 1.93 | Ex | 522 | Invention Example |
| 19 | 1.50 | 0.0080 | 0.0427 | 5.34 | 1.94 | Ex | 512 | Invention Example |
| 20 | 1.50 | 0.0080 | 0.0427 | 5.34 | 1.94 | Ex | 541 | Invention Example |
| 21 | 1.50 | 0.0080 | 0.0427 | 5.34 | 1.93 | Ex | 541 | Invention Example |
| 22 | 1.50 | 0.0006 | 0.0427 | 66.75 | 1.94 | G | 340 | Comparative Example |
| 23 | 1.50 | 0.0130 | 0.0427 | 3.30 | 1.94 | P | 541 | Comparative Example |
| 24 | 4.27 | 0.0105 | 0.2452 | 23.35 | 1.93 | G | 330 | Comparative Example |
| 25 | 1.05 | 0.0410 | 0.0656 | 1.60 | 1.93 | G | 480 | Invention Example |
| 26 | 11.00 | 0.0013 | 0.0490 | 39.16 | 1.94 | G | 512 | Invention Example |

As can be seen from Tables 1A and 1B, the MgO powders described in Nos. 1 to 6, 13 to 21, 25, and 26 were all within the scope of the present invention as for the B content of the MgO powder, the MgO particles having an average particle size of less than 0.8 µm, and the MgO particles having an average particle size of 0.8 µm or more, and were also within the scope of the present invention as for Bl/Bs and the percentage of the small particles in the entire particles. Therefore, the grain-oriented electrical steel sheets manufactured by applying the annealing separators using these MgO powders had excellent coating tension of 350 gf/mm² or more, excellent external appearance characteristics with fewer external appearance defects, and excellent magnetic characteristics.

On the other hand, the MgO powders described in Nos. 7 and 24 were out of the scope as for the B content, and the obtained grain-oriented electrical steel sheets were poor in coating tension.

The MgO powder described in No. 8 was out of the scope as for the B content of the MgO particles of 0.8 µm or more, and the obtained grain-oriented electrical steel sheet was poor in coating tension.

The MgO powders described in Nos. 9 and 10 were out of the scope as for the B content of the MgO particles of less than 0.8 µm, and magnetic characteristics and external appearance were poor.

The MgO powders described in Nos. 11 and 12 were within the scope as for the B content of the entire powder, but were out of the scope as for the Bl/Bs, and magnetic characteristics and coating tension were poor.

The MgO powder described in No. 22 was out of the scope as for the B content of the MgO particles having an average particle size of less than 0.8 µm, and the obtained grain-oriented electrical steel sheet was poor in coating tension.

The MgO powder described in No. 23 was out of the scope as for the B content of the MgO particles having an average particle size of less than 0.8 µm, and the obtained grain-oriented electrical steel sheet was poor in external appearance.

### <Example 2>

Magnesium hydroxide, basic magnesium carbonate, and magnesium carbonate were mixed in the percentage shown in Tables 2A and 2B on the basis of MgO equivalent, and boron or a boron compound was added thereto as necessary, and then the mixture was baked at the temperature shown in Tables 2A and 2B. Thus, MgO particles having an average particle size of less than 0.8 µm was obtained.

Further, the MgO particles were mixed with the MgO particles having an average particle size of 0.8 µm or more (B content: 0.0660 to 0.0770 mass%, and tri-coordinated boron percentage: 82 mass%) as shown in Table 3. Thus, the MgO powders shown in Tables 4A, 4B, and 4C were prepared.

To the MgO powder, 5.0% of TiO₂ was added when the mass of the MgO powder was defined as 100%, and water was further added, to obtain an annealing separator aqueous slurry.

The annealing separator was applied on the surface of a cold rolled sheet (a known steel sheet to be used for a material of a grain-oriented electrical steel sheet) after decarburization annealing (after primary recrystallization annealing), and then the steel sheet was baked at 300°C for 30 seconds to dry the aqueous slurry. After being baked, the steel sheet was held at 1200°C for 20 hours for finish annealing.

By the above manufacturing process, a grain-oriented electrical steel sheet including a base steel sheet and a primary coating containing a composite oxide such as forsterite (Mg₂SiO₄) was manufactured.

The obtained grain-oriented electrical steel sheet was evaluated for magnetic characteristics, external appearance, and coating tension, in the same manner as in Example 1. The results are shown in Table 4C.

**[Table 2A]**

| No. | Raw material powder having average particle size of less than 0.8 µm | | | | | | Additive | | Baking temperature |
|---|---|---|---|---|---|---|---|---|---|
| | MgO raw material | | | | | | | | |
| | Mg(OH)₂ | | MgCO₃ | | 4MgCO₃•Mg(OH)₂•5H₂O | | B | Na₂B₄O₅(OH)₄•8H₂O | |
| | Mass ratio in raw material powder based on MgO equivalent | B mass ratio | Mass ratio in raw material powder based on MgO equivalent | B mass ratio | Mass ratio in raw material powder based on MgO equivalent | B mass ratio | Mass ratio based on MgO equivalent | B mass ratio based on MgO equivalent | |
| | | | | | | | | | (°C) |
| 101 | 100 | 0.0100 | | | | | | | 800 |
| 102 | | | 100 | 0.0100 | | | | | 800 |
| 103 | | | | | 100 | 0.0100 | | | 800 |
| 104 | 50 | 0.0080 | 50 | 0.0080 | | | | | 800 |
| 105 | | | 50 | 0.0080 | 50 | 0.0080 | | | 900 |
| 106 | 50 | 0.0080 | | | 50 | 0.0080 | | | 900 |
| 107 | 100 | 0.0010 | | | | | 0.0050 | | 900 |
| 108 | | | 100 | 0.0010 | | | 0.0030 | 0.0030 | 1000 |
| 109 | | | | | 100 | 0.0050 | 0.0020 | 0.0020 | 1100 |
| 110 | 100 | 0.0100 | | | | | | | 600 |
| 111 | 100 | 0.0200 | | | | | | | 1200 |
| 112 | 100 | 0.0017 | | | | | | | 800 |
| 113 | 100 | 0.0700 | | | | | 0.0200 | | 800 |
| 114 | | | 100 | 0.0016 | | | | | 900 |
| 115 | | | 100 | 0.0700 | | | | 0.0200 | 900 |

**[Table 2B]**

| No. | Raw material powder having average particle size of less than 0.8 µm | | | | | | Additive | | Baking temperature |
|---|---|---|---|---|---|---|---|---|---|
| | MgO raw material | | | | | | | | |
| | Mg(OH)₂ | | MgCO₃ | | 4MgCO₃•Mg(OH)₂•5H₂O | | B | Na₂B₄O₅(OH)₄•8H₂O | |
| | Mass ratio in raw material powder based on MgO equivalent | B mass ratio | Mass ratio in raw material powder based on MgO equivalent | B mass ratio | Mass ratio in raw material powder based on MgO equivalent | B mass ratio | Mass ratio based on MgO equivalent | B mass ratio based on MgO equivalent | |
| | | | | | | | | | (°C) |
| 116 | | | | | 100 | 0.0018 | | | 1000 |
| 117 | | | | | 100 | 0.0700 | 0.0200 | | 1000 |
| 118 | 100 | 0.0030 | | | | | | | 1000 |
| 119 | 100 | 0.0720 | | | | | | | 1000 |
| 120 | 100 | 0.0120 | | | | | | | 1000 |
| 121 | 100 | 0.0100 | | | | | | | 1000 |
| 122 | 100 | 0.0100 | | | | | | | 1000 |
| 123 | 100 | 0.0080 | | | | | | | 1000 |
| 124 | 100 | 0.0220 | | | | | | | 1000 |
| 125 | 100 | 0.0130 | | | | | | | 1000 |
| 126 | 100 | 0.0410 | | | | | | | 1000 |
| 127 | 100 | 0.0220 | | | | | | | 1000 |
| 128 | 100 | 0.0120 | | | | | | | 1000 |
| 129 | 100 | 0.0440 | | | | | | | 1000 |
| 130 | 100 | 0.0190 | | | | | | | 1000 |
| 131 | 100 | 0.0190 | | | | | | | 1000 |

**[Table 3]**

| No. | Mixing | | | |
|---|---|---|---|---|
| | MgO particles having average particle size of less than 0.8 µm | MgO particles having average particle size of 0.8 µm or more | B content ratio | Mass ratio of MgO particles having average particle size of less than 0.8 µm in entire mixed powder |
| | B content (mass%) | B content (mass%) | | |
| 101 | 0.0100 | 0.0660 | 6.60 | 0.20 |
| 102 | 0.0100 | 0.0660 | 6.60 | 0.20 |
| 103 | 0.0100 | 0.0660 | 6.60 | 0.20 |
| 104 | 0.0080 | 0.0660 | 8.25 | 0.20 |
| 105 | 0.0080 | 0.0660 | 8.25 | 0.20 |
| 106 | 0.0080 | 0.0660 | 8.25 | 0.20 |
| 107 | 0.0060 | 0.0770 | 12.8 | 0.20 |
| 108 | 0.0070 | 0.0770 | 11.0 | 0.20 |
| 109 | 0.0090 | 0.0770 | 8.56 | 0.20 |
| 110 | 0.0100 | 0.0770 | 7.70 | 0.20 |
| 111 | 0.0200 | 0.0770 | 3.85 | 0.20 |
| 112 | 0.0017 | 0.0420 | 24.7 | 0.20 |
| 113 | 0.0900 | 0.0730 | 0.81 | 0.20 |
| 114 | 0.0016 | 0.0420 | 26.3 | 0.20 |
| 115 | 0.0900 | 0.0730 | 0.81 | 0.20 |
| 116 | 0.0018 | 0.0730 | 40.6 | 0.20 |
| 117 | 0.0900 | 0.0730 | 0.81 | 0.20 |
| 118 | 0.0030 | 0.0450 | 15.0 | 0.20 |
| 119 | 0.0720 | 0.0820 | 1.14 | 0.20 |
| 120 | 0.0120 | 0.0730 | 6.08 | 0.20 |
| 121 | 0.0120 | 0.0730 | 6.08 | 0.20 |
| 122 | 0.0120 | 0.0730 | 6.08 | 0.20 |
| 123 | 0.0120 | 0.0730 | 6.08 | 0.20 |
| 124 | 0.0120 | 0.0730 | 6.08 | 0.20 |
| 125 | 0.0120 | 0.0730 | 6.08 | 0.20 |
| 126 | 0.0120 | 0.0730 | 6.08 | 0.20 |
| 127 | 0.0120 | 0.0730 | 6.08 | 0.20 |
| 128 | 0.0080 | 0.0220 | 2.75 | 0.20 |
| 129 | 0.0550 | 0.3080 | 5.60 | 0.50 |
| 130 | 0.0080 | 0.0730 | 9.13 | 0.04 |
| 131 | 0.0080 | 0.0730 | 9.13 | 0.82 |

**[Table 4A]**

| No. | MgO powder | | | | | | | | | | |
|---|---|---|---|---|---|---|---|---|---|---|---|
| | Content in MgO powder (mass%) | | | | MgO particles having average particle size of less than 0.8 µm | | | | MgO particles having average particle size of 0.8 | | |
| | | | | | | | | | | µm or more | |
| | B | Cl | Ca | Sr | Ba | Total of Ca, Sr, and Ba | B content Bs (mass%) | Percentage of tri-coordinated boron (mass%) | Percentage in entire particles (mass%) | B content BI (mass%) | Percentage of tri-coordinated boron (mass%) |
| 101 | 0.055 | 0.030 | 0.40 | | | 0.40 | 0.0100 | 42 | 20 | 0.0660 | 82 |
| 102 | 0.055 | 0.030 | 0.40 | | | 0.40 | 0.0100 | 42 | 20 | 0.0660 | 82 |
| 103 | 0.055 | 0.030 | | 0.50 | | 0.50 | 0.0100 | 42 | 20 | 0.0660 | 82 |
| 104 | 0.054 | 0.030 | | 0.50 | | 0.50 | 0.0080 | 48 | 20 | 0.0660 | 82 |
| 105 | 0.054 | 0.030 | | | 0.80 | 0.80 | 0.0080 | 49 | 20 | 0.0660 | 82 |
| 106 | 0.054 | 0.030 | | | 0.90 | 0.90 | 0.0080 | 48 | 20 | 0.0660 | 82 |
| 107 | 0.063 | 0.030 | 0.60 | | | 0.60 | 0.0060 | 54 | 20 | 0.0770 | 82 |
| 108 | 0.063 | 0.030 | 0.60 | | | 0.60 | 0.0070 | 51 | 20 | 0.0770 | 82 |
| 109 | 0.063 | 0.030 | 0.60 | | | 0.60 | 0.0090 | 52 | 20 | 0.0770 | 82 |
| 110 | 0.064 | 0.030 | 0.60 | | | 0.60 | 0.0100 | 38 | 20 | 0.0770 | 82 |
| 111 | 0.066 | 0.030 | 0.60 | | | 0.60 | 0.0200 | 82 | 20 | 0.0770 | 82 |
| 112 | 0.059 | 0.030 | 0.60 | | | 0.60 | 0.0010 | 42 | 20 | 0.0730 | 82 |
| 113 | 0.076 | 0.030 | 0.60 | | | 0.60 | 0.0900 | 42 | 20 | 0.0730 | 82 |
| 114 | 0.059 | 0.030 | | 0.60 | | 0.60 | 0.0010 | 46 | 20 | 0.0730 | 82 |
| 115 | 0.076 | 0.030 | 0.60 | | | 0.60 | 0.0900 | 48 | 20 | 0.0730 | 82 |

**[Table 4B]**

| No. | MgO powder | | | | | | | | | | |
|---|---|---|---|---|---|---|---|---|---|---|---|
| | Content in MgO powder (mass%) | | | | | | MgO particles having average particle size of less than 0.8 µm | | | MgO particles having average particle size of 0.8 µm or more | |
| | B | Cl | Ca | Sr | Ba | Total of Ca, Sr, and Ba | B content Bs (mass%) | Percentage of tri-coordinated boron (mass%) | Percentage in entire particles (mass%) | B content BI (mass%) | Percentage of tri-coordinated boron (mass%) |
| 116 | 0.059 | 0.030 | | | 0.60 | 0.60 | 0.0010 | 55 | 20 | 0.0730 | 82 |
| 117 | 0.076 | 0.030 | 0.60 | | | 0.60 | 0.0900 | 55 | 20 | 0.0730 | 82 |
| 118 | 0.076 | 0.030 | 0.60 | | | 0.60 | 0.0030 | 70 | 40 | 0.0450 | 82 |
| 119 | 0.076 | 0.030 | 0.60 | | | 0.60 | 0.0720 | 55 | 20 | 0.0820 | 82 |
| 120 | 0.076 | 0.006 | 0.60 | | | 0.60 | 0.0120 | 55 | 20 | 0.0730 | 82 |
| 121 | 0.076 | 0.077 | 0.60 | | | 0.60 | 0.0120 | 55 | 20 | 0.0730 | 82 |
| 122 | 0.076 | 0.030 | 0.03 | | | 0.03 | 0.0120 | 55 | 20 | 0.0730 | 82 |
| 123 | 0.076 | 0.030 | 3.58 | | | 3.58 | 0.0120 | 55 | 20 | 0.0730 | 82 |
| 124 | 0.076 | 0.030 | 0.01 | | 0.02 | 0.03 | 0.0120 | 55 | 20 | 0.0730 | 81 |
| 125 | 0.076 | 0.030 | 2.44 | 1.50 | | 3.94 | 0.0120 | 55 | 20 | 0.0730 | 93 |
| 126 | 0.076 | 0.030 | 0.60 | | | 0.60 | 0.0120 | 55 | 20 | 0.0730 | 82 |
| 127 | 0.076 | 0.030 | 0.60 | | | 0.60 | 0.0120 | 55 | 20 | 0.0730 | 82 |
| 128 | 0.076 | 0.030 | 0.60 | | | 0.60 | 0.0080 | 55 | 20 | 0.0220 | 82 |
| 129 | 0.182 | 0.030 | 0.60 | | | 0.60 | 0.0550 | 55 | 50 | 0.3080 | 82 |
| 130 | 0.076 | 0.030 | 0.60 | | | 0.60 | 0.0080 | 55 | 4 | 0.0730 | 82 |
| 131 | 0.076 | 0.030 | 0.60 | | | 0.60 | 0.0080 | 55 | 82 | 0.0730 | 82 |

**[Table 4C]**

| No. | MgO powder | | | | Grain-oriented electrical steel sheet | | | Remarks |
|---|---|---|---|---|---|---|---|---|
| | Bl/Bs | BO₃ amount ratio in small particles | BO₃ amount ratio in large particles | BO₃ amount ratio | Characteristics | | | |
| | | | | | Magnetic characteristics B8 (T) | External appearance | Coating tension (gf/mm²) | |
| 101 | 6.60 | 0.0008 | 0.0433 | 51.54 | 1.94 | G | 513 | Invention Example |
| 102 | 6.60 | 0.0008 | 0.0433 | 51.54 | 1.95 | G | 512 | Invention Example |
| 103 | 6.60 | 0.0008 | 0.0433 | 51.54 | 1.94 | G | 543 | Invention Example |
| 104 | 8.25 | 0.0008 | 0.0433 | 56.38 | 1.95 | G | 516 | Invention Example |
| 105 | 8.25 | 0.0008 | 0.0433 | 55.22 | 1.94 | G | 543 | Invention Example |
| 106 | 8.25 | 0.0008 | 0.0433 | 56.38 | 1.94 | G | 542 | Invention Example |
| 107 | 12.83 | 0.0006 | 0.0505 | 77.95 | 1.95 | G | 522 | Invention Example |
| 108 | 11.00 | 0.0007 | 0.0505 | 70.75 | 1.94 | G | 512 | Invention Example |
| 109 | 8.56 | 0.0009 | 0.0505 | 53.97 | 1.94 | G | 522 | Invention Example |
| 110 | 7.70 | 0.0008 | 0.0505 | 66.46 | 1.94 | G | 549 | Invention Example |
| 111 | 3.85 | 0.0033 | 0.0505 | 15.40 | 1.94 | Ex | 548 | Invention Example |
| 112 | 73.00 | 0.0001 | 0.0479 | 570.10 | 1.91 | P | 492 | Comparative Example |
| 113 | 0.81 | 0.0076 | 0.0479 | 6.33 | 1.92 | P | 486 | Comparative Example |
| 114 | 73.00 | 0.0001 | 0.0479 | 520.52 | 1.92 | P | 470 | Comparative Example |
| 115 | 0.81 | 0.0086 | 0.0479 | 5.54 | 1.92 | P | 480 | Comparative Example |
| 116 | 73.00 | 0.0001 | 0.0479 | 435.35 | 1.92 | P | 492 | Comparative Example |
| 117 | 0.81 | 0.0099 | 0.0479 | 4.84 | 1.92 | P | 486 | Comparative Example |
| 118 | 15.00 | 0.0008 | 0.0221 | 26.36 | 1.93 | G | 510 | Invention Example |
| 119 | 1.14 | 0.0079 | 0.0538 | 6.79 | 1.93 | Ex | 399 | Invention Example |
| 120 | 6.08 | 0.0013 | 0.0479 | 36.28 | 1.93 | G | 412 | Invention Example |
| 121 | 6.08 | 0.0013 | 0.0479 | 36.28 | 1.94 | G | 432 | Invention Example |
| 122 | 6.08 | 0.0013 | 0.0479 | 36.28 | 1.93 | G | 418 | Invention Example |
| 123 | 6.08 | 0.0013 | 0.0479 | 36.28 | 1.93 | G | 377 | Invention Example |
| 124 | 6.08 | 0.0013 | 0.0473 | 35.84 | 1.93 | G | 392 | Invention Example |
| 125 | 6.08 | 0.0013 | 0.0543 | 41.15 | 1.94 | G | 443 | Invention Example |
| 126 | 6.08 | 0.0013 | 0.0479 | 36.28 | 1.93 | G | 392 | Invention Example |
| 127 | 6.08 | 0.0013 | 0.0479 | 36.28 | 1.93 | G | 411 | Invention Example |
| 128 | 2.75 | 0.0009 | 0.0144 | 16.40 | 1.93 | P | 422 | Comparative Example |
| 129 | 5.60 | 0.0151 | 0.1263 | 8.35 | 1.93 | P | 415 | Comparative Example |
| 130 | 9.13 | 0.0002 | 0.0575 | 326.51 | 1.93 | P | 421 | Comparative Example |
| 131 | 9.13 | 0.0036 | 0.0108 | 2.99 | 1.93 | P | 472 | Comparative Example |

As can be seen from Tables 2A to 4C, Nos. 101 to 111 and 118 to 127 were within the scope of the present invention as for the B content of the MgO powder, the small particles, and the large particles, Bl/Bs, and the percentage of the small particles in the entire particles. Therefore, the grain-oriented electrical steel sheets manufactured by applying the annealing separators using these MgO powders had excellent coating tension of 350 gf/mm² or more, excellent external appearance with fewer external appearance defects, and excellent magnetic characteristics.

On the other hand, Nos. 112 to 117 were out of the scope of the invention as for the B content of the small particles and Bl/Bs, and magnetic characteristics and external appearance were poor.

Nos. 128 and 129 were out of the scope of the invention as for the B content of the large particles and external appearance was poor.

Nos. 130 and 131 were out of the scope of the invention as for the percentage of the small particles, and external appearance was poor.

### INDUSTRIAL APPLICABILITY

According to the present invention, it is possible to provide an MgO powder with which a grain-oriented electrical steel sheet after finish annealing can be provided with excellent magnetic characteristics, external appearance, and coating tension. In addition, according to the present invention, it is possible to provide a manufacturing method of a grain-oriented electrical steel sheet using the MgO powder; a manufacturing method of the MgO powder; and a manufacturing method of MgO particles contained in the MgO powder.

Therefore, the present invention has high industrial applicability.

## Claims

1. An MgO powder for an annealing separator, wherein
the MgO powder contains B in an amount of 0.030 mass% or more and less than 0.250 mass%, and
when entire particles constituting the MgO powder are classified with a classifier based on a classification point D50 to obtain: MgO particles having an average particle size of less than 0.8 µm, which are defined as small particles; and MgO particles having an average particle size of 0.8 µm or more, which are defined as large particles,
the small particles have a B content Bs of 0.0020 mass% or more and less than 0.0800 mass%,
the large particles have a B content Bl of 0.0400 mass% or more and less than 0.3000 mass%,
the small particles have a percentage of 5 to 80 mass% based on the entire particles, and
the Bl has a ratio based on the Bs, Bl/Bs, of 1.05 or more and 30.0 or less.

2. The MgO powder according to claim 1, wherein
B contained in the small particles has tri-coordinated boron in a percentage of 40 mass% or more and 70 mass% or less, and
B contained in the large particles has tri-coordinated boron in a percentage of 80 mass% or more and 95 mass% or less.

3. The MgO powder according to claim 1, wherein
the large particles' tri-coordinated boron amount has a ratio of 2.00 or more and 20.00 or less based on the small particles' tri-coordinated boron amount.

4. The MgO powder according to claim 2, wherein
the large particles' tri-coordinated boron amount has a ratio of 2.00 or more and 20.00 or less based on the small particles' tri-coordinated boron amount.

5. The MgO powder according to any one of claims 1 to 4, wherein
the MgO powder further contains Cl in an amount of 0.005 mass% or more and 0.080 mass% or less.

6. The MgO powder according to any one of claims 1 to 4, wherein
the MgO powder further contains one or more selected from the group consisting of Ca, Sr, and Ba in a total amount of 0.02 mass% or more and 4.00 mass% or less.

7. The MgO powder according to claim 5, wherein
the MgO powder further contains one or more selected from the group consisting of Ca, Sr, and Ba in a total amount of 0.02 mass% or more and 4.00 mass% or less.

8. A manufacturing method of the MgO powder according to claim 1, the method comprising:
mixing:
MgO particles having a B content of 0.0020 mass% or more and 0.0800 mass% or less and having an average particle size of less than 0.8 µm; and
MgO particles having a B content of 0.0400 mass% or more and 0.3000 mass% or less and having an average particle size of 0.8 µm or more
so that the B content of the MgO particles having an average particle size of 0.8 µm or more has a ratio of 1.05 or more based on the B content of the MgO particles having an average particle size of less than 0.8 µm, and the MgO particles having an average particle size of less than 0.8 µm are contained in a mass ratio of 0.05 or more and 0.80 or less based on the mixed MgO powder.

9. A manufacturing method of the MgO particles having an average particle size of less than 0.8 µm and being according to claim 8, the method comprising:
heating and baking, in air or nitrogen,
a raw material powder made of one or two or more selected from magnesium hydroxide, basic magnesium carbonate, and magnesium carbonate, the raw material powder containing B in a mass ratio of 0.0020 or more and 0.0800 or less based on MgO equivalent of the raw material powder, and having an average particle size of less than 0.8 µm.

10. A manufacturing method of the MgO particles having an average particle size of less than 0.8 µm and being according to claim 8, the method comprising:
heating and baking, in air or nitrogen, a raw material powder made of one or two or more selected from magnesium hydroxide, basic magnesium carbonate, and magnesium carbonate, and having an average particle size of less than 0.8 µm, after adding boron or a boron compound so that the raw material powder contains B in a mass ratio of 0.0020 or more and 0.0800 or less based on MgO equivalent of the raw material powder.

11. The manufacturing method of MgO particles according to claim 9 or 10, wherein
the baking is performed at a baking temperature of 700 to 1100°C.

12. A manufacturing method of a grain-oriented electrical steel sheet, the method comprising:
a hot rolling step of hot-rolling a steel slab to obtain a hot rolled sheet;
a hot rolled sheet annealing step of annealing the hot rolled sheet;
a cold rolling step of cold-rolling the hot rolled sheet after the hot rolled sheet annealing step to obtain a cold rolled sheet;
a decarburization annealing step of decarburization-annealing the cold rolled sheet; and
a finish annealing step of applying and drying an annealing separator on the cold rolled sheet after the decarburization annealing step, followed by finish annealing,
wherein the annealing separator to be used is an annealing separator obtained by mixing the MgO powder according to any one of claims 1 to 4, TiO₂, and water into a slurry form.

13. A manufacturing method of a grain-oriented electrical steel sheet, the method comprising:
a hot rolling step of hot-rolling a steel slab to obtain a hot rolled sheet;
a hot rolled sheet annealing step of annealing the hot rolled sheet;
a cold rolling step of cold-rolling the hot rolled sheet after the hot rolled sheet annealing step to obtain a cold rolled sheet;
a decarburization annealing step of decarburization-annealing the cold rolled sheet; and
a finish annealing step of applying and drying an annealing separator on the cold rolled sheet after the decarburization annealing step, followed by finish annealing,
wherein the annealing separator to be used is an annealing separator obtained by mixing the MgO powder according to claim 5, TiO₂, and water into a slurry form.

14. A manufacturing method of a grain-oriented electrical steel sheet, the method comprising:
a hot rolling step of hot-rolling a steel slab to obtain a hot rolled sheet;
a hot rolled sheet annealing step of annealing the hot rolled sheet;
a cold rolling step of cold-rolling the hot rolled sheet after the hot rolled sheet annealing step to obtain a cold rolled sheet;
a decarburization annealing step of decarburization-annealing the cold rolled sheet; and
a finish annealing step of applying and drying an annealing separator on the cold rolled sheet after the decarburization annealing step, followed by finish annealing,
wherein the annealing separator to be used is an annealing separator obtained by mixing the MgO powder according to claim 6, TiO₂, and water into a slurry form.

15. A manufacturing method of a grain-oriented electrical steel sheet, the method comprising:
a hot rolling step of hot-rolling a steel slab to obtain a hot rolled sheet;
a hot rolled sheet annealing step of annealing the hot rolled sheet;
a cold rolling step of cold-rolling the hot rolled sheet after the hot rolled sheet annealing step to obtain a cold rolled sheet;
a decarburization annealing step of decarburization-annealing the cold rolled sheet; and
a finish annealing step of applying and drying an annealing separator on the cold rolled sheet after the decarburization annealing step, followed by finish annealing,
wherein the annealing separator to be used is an annealing separator obtained by mixing the MgO powder according to claim 7, TiO₂, and water into a slurry form.
